# EUROPEAN PATENT APPLICATION

(11) **EP 3 828 907 A1**
(43) Date of publication of application: **02.06.2021**
(21) Application number: 19841228.0
(22) Date of filing: 26.07.2019
(51) Int. Cl.: H01G 9/035, H01G 9/145, H01G 9/15

(54) **ELECTROLYTIC CAPACITOR**

(30) Priority: 26.07.2018 JP 2018140625
(71) Applicant: Panasonic Intellectual Property Management Co., Ltd., Osaka-shi, Osaka 540-6207 (JP)
(72) Inventor: TSUBAKI, Yuichiro, Osaka-shi, Osaka 540-6207 (JP); KUSHIZAKI, Junya, Osaka-shi, Osaka 540-6207 (JP); AOYAMA, Tatsuji, Osaka-shi, Osaka 540-6207 (JP)
(74) Representative: Grünecker Patent- und Rechtsanwälte PartG mbB
(86) International application number: PCT/JP2019/029373
(87) International publication number: WO 2020/022471

(57) **Abstract**

An object of the present disclosure is to provide an electrolytic capacitor usable at various temperatures. An electrolytic capacitor (1) according to the present disclosure includes an anode body (21), a cathode body (22), a solid electrolyte (25), and a liquid component (26). The anode body (21) has a surface on which a dielectric layer (210) is to be formed. The solid electrolyte (25) is in contact with the dielectric layer (210) and is disposed between the anode body (21) and the cathode body (22). The liquid component (26) is in contact with the dielectric layer (210) and the solid electrolyte (25) and contains a solvent and an acid component. The acid component includes a composite acid compound of an inorganic acid and an organic acid. The solvent contains a polyol including two or more hydroxyl groups and a polyalkylene glycol having three or more carbon atoms per repeating unit.

## Description

### Technical Field

The present disclosure generally relates to electrolytic capacitors, and specifically, to an electrolytic capacitor including an anode body, a cathode body, a solid electrolyte, and a liquid component.

### Background Art

An electrolytic capacitor having a small size, large electrostatic capacitance, and low Equivalent Series Resistance (ESR) is regarded as promising. For example, an electrolytic capacitor is known which includes an anode body on which a dielectric layer is formed, a solid electrolyte layer formed to cover at least part of the dielectric layer, and an electrolytic solution, wherein a conductive polymer is used as the solid electrolyte layer.

For example, Patent Literature 1 describes a solid electrolytic capacitor manufactured by forming, in a capacitor element with an anode electrode foil and a cathode electrode foil wound with an interposed separator, a solid electrolyte layer by using a conductive polymer dispersion in which particles of a conductive polymer are dispersed in a solvent. In the solid electrolytic capacitor described in Patent Literature 1, voids formed inside the capacitor element are filled with an electrolytic solution containing a salt of a composite compound of inorganic acid and organic acid as a solute.

Composite acid compounds are easily dissolved in glycol-based solvents but are not easily dissolved in other solvents. In Patent Literature 1, ethylene glycol is adopted as a solvent so that the composite acid compound is dissolved in the solvent.

When the solvent is ethylene glycol, however, it cannot be said that the solidifying point of the solvent is satisfactorily low, and it is difficult to use the electrolytic capacitor at a low temperature.

### Citation List

### Patent Literature

Patent Literature 1: JP 2015-165550 A

### Summary of Invention

An object of the present disclosure is to provide an electrolytic capacitor usable at various temperatures.

An electrolytic capacitor according to one aspect of the present disclosure includes an anode body, a cathode body, a solid electrolyte, and a liquid component. The anode body has a surface provided with a dielectric layer. The solid electrolyte is in contact with the dielectric layer and is disposed between the anode body and the cathode body. The liquid component is in contact with the dielectric layer and the solid electrolyte. The liquid component contains a solvent and an acid component. The acid component contains a composite acid compound of an inorganic acid and an organic acid. The solvent contains a polyol including two or more hydroxyl groups and a polyalkylene glycol having three or more carbon atoms per repeating unit.

An electrolytic capacitor according to another aspect of the present disclosure includes an anode body, a cathode body, a solid electrolyte, and a liquid component. The anode body has a surface provided with a dielectric layer. The solid electrolyte is in contact with the dielectric layer and is disposed between the anode body and the cathode body. The liquid component is in contact with the dielectric layer and the solid electrolyte and contains a solvent and an acid component. The acid component contains a composite acid compound of an inorganic acid and an organic acid. The solvent contains a polyol including two or more hydroxyl groups and a polyalkylene glycol. The polyalkylene glycol has a weight greater than a weight of the polyol.

### Brief Description of Drawings

FIG. 1 is a sectional view schematically illustrating an electrolytic capacitor according to an embodiment of the present disclosure;
FIG. 2 is a perspective view schematically illustrating a capacitor element included in the electrolytic capacitor, where the capacitor element is partially expanded; and
FIG. 3 is an enlarged view schematically illustrating a state where a solid electrolyte is formed between an anode body and a cathode body in the capacitor element.

### Description of Embodiments

### (First Embodiment)

### 1. Schema

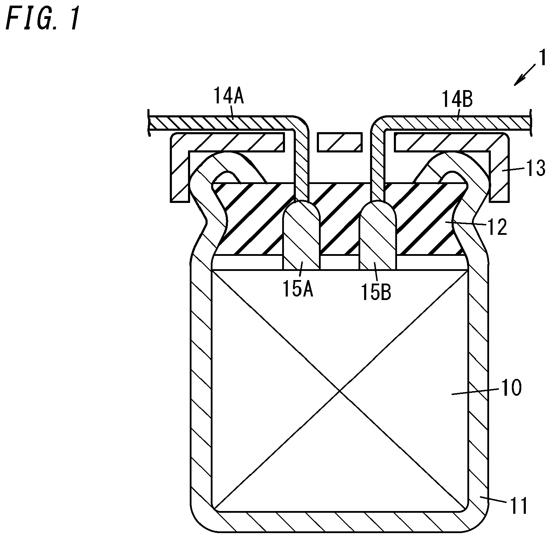

As illustrated in FIGS. 1 to 3, an electrolytic capacitor 1 according to an embodiment of the present disclosure includes an anode body 21, a cathode body 22, a solid electrolyte 25, and a liquid component 26. The anode body 21 has a surface on which a dielectric layer 210 is to be formed. The solid electrolyte 25 is in contact with the dielectric layer 210 and is located between the anode body 21 and the cathode body 22. The liquid component 26 is in contact with the dielectric layer 210 and the solid electrolyte 25 and includes a solvent and an acid component. The acid component includes a composite acid compound of an inorganic acid and an organic acid. The solvent contains a polyol including two or more hydroxyl groups and a polyalkylene glycol having three or more carbon atoms per repeating unit. Alternatively, the solvent contains the polyol including two or more hydroxyl groups and a polyalkylene glycol. The polyalkylene glycol has a weight greater than a weight of the polyol.

When the solvent contains the polyol including two or more hydroxyl groups and the polyalkylene glycol, the composite acid compound can be dissolved in the solvent. In particular, when the solvent contains the polyalkylene glycol having three or more carbon atoms per repeating unit, the solidifying point of the solvent can be lowered. As a result, the electrolytic capacitor 1 is readily used also at a low temperature, and the electrolytic capacitor 1 can be used at various temperatures.

### 2. Details

### 2-1. Electrolytic Capacitor

The configuration of the electrolytic capacitor 1 according to the present embodiment will be described in detail below.

As illustrated in FIG. 1, the electrolytic capacitor 1 includes a capacitor element 10, a bottomed case 11 (hereinafter also referred to as a case 11), a sealing member 12, a seat plate 13, lead wires 14A and 14B, and lead tabs 15A and 15B.

### (1) Bottomed Case

The case 11 is configured to accommodate the capacitor element 10 therein. Specifically, the case 11 is a tubular member and has a closed bottom part and a tip having an opening. Thus, from the opening of the case 11, the capacitor element 10 can be inserted into the case 11. The case 11 is made of, for example, one or more materials selected from the group consisting of aluminum, stainless steel, copper, iron, brass, and an alloy thereof.

### (2) Sealing Member and Seat Plate

The opening of the case 11 is closed with the sealing member 12. The sealing member 12 is made of, for example, ethylene-propyleneterpolymer (EPT), a rubber material such as isobutylene - isoprene rubber (IIR), or a resin material such as an epoxy resin. The sealing member 12 has a pair of through holes. The case 11 is drawn inward in the vicinity of its opening end, and the opening end is curled, thereby swaging the sealing member 12. Moreover, the sealing member 12 is covered with the seat plate 13. The seat plate 13 is made of, for example, an insulating resin material.

### (3) Lead Wires and Lead Tabs

The pair of lead wires 14A and 14B are pulled out from the through holes formed in the sealing member 12 and penetrate through the seat plate 13. The pair of lead tabs 15A and 15B are embedded in the sealing member 12. The lead tab 15A electrically connects the lead wire 14A to an electrode of the capacitor element 10. The lead tab 15B electrically connects the lead wire 14B to an electrode of the capacitor element 10.

### (4) Capacitor Element

The capacitor element 10, which is to be accommodated in the case 11, will be described in detail below.

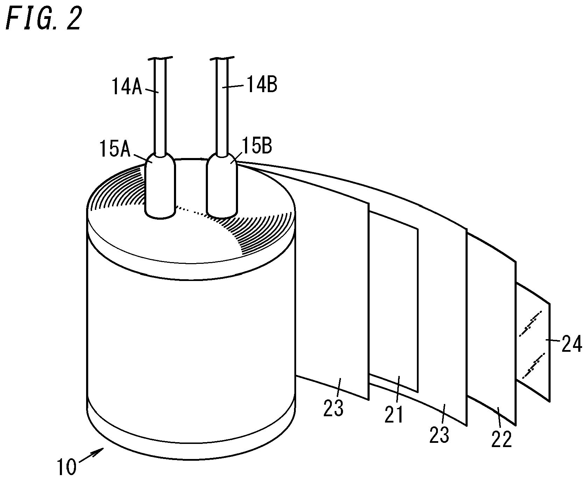

As illustrated in FIG. 2, the capacitor element 10 of the present embodiment is a winding body. The winding body shown in FIG. 2 is in a state where the capacitor element 10 is taken out of the electrolytic capacitor 1 shown in FIG. 1 and is partially expanded.

The capacitor element 10 includes the anode body 21, the cathode body 22, and a separator 23. As illustrated in FIG. 2, the lead tab 15A is electrically connected to the anode body 21, and the lead tab 15B is electrically connected to the cathode body 22. Thus, the anode body 21 is electrically connected via the lead tab 15A to the lead wire 14A, and the cathode body 22 is electrically connected via the lead tab 15B to the lead wire 14B.

The separator 23 is disposed between the anode body 21 and the cathode body 22. The anode body 21, the cathode body 22, and the separator 23 are wound in this state. The separator 23 is, for example, nonwoven fabric containing cellulose, kraft, polyethylene terephthalate, polyphenylene sulfide, nylon, aromatic polyamide, polyimide, polyamideimide, polyetherimide, rayon, glassy substance, vinylon, aramid fiber, or the like. The capacitor element 10 has an outermost perimeter fixed with a fixing tape 24.

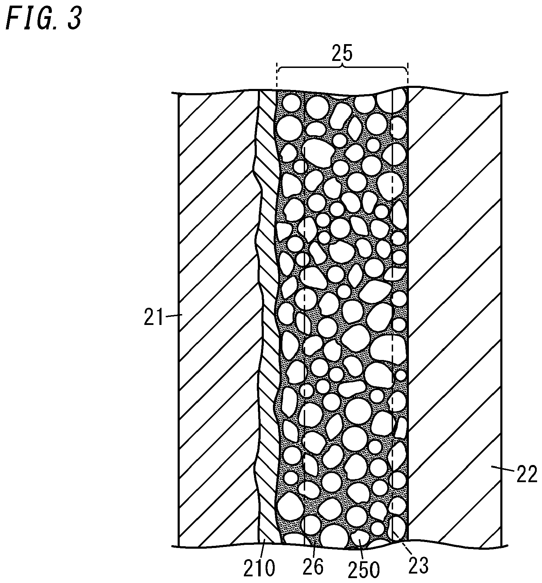

In the capacitor element 10, the solid electrolyte 25 is formed between the anode body 21 and the cathode body 22. An enlarged view schematically illustrating this state is shown in FIG. 3. As illustrated in FIG. 3, the separator 23 holds the solid electrolyte 25.

### (4-1) Anode Body

As illustrated in FIG. 3, the anode body 21 includes a metal foil and the dielectric layer 210 formed on a surface of the metal foil.

The surface of the metal foil is a roughened surface. This can increase the surface area of the metal foil and also increase area of the dielectric layer 210 to be formed on the surface of the metal foil. A method of roughening the surface is not particularly limited, but, for example, etching may be adopted as the method of roughening the surface. A material for the metal foil is not particularly limited but is preferably, for example, a valve action metal such as aluminum, tantalum, niobium or titanium, or an alloy containing the valve action metal.

The dielectric layer 210 is formed by performing a chemical conversion process on the surface of the metal foil. The chemical conversion process forms an oxide coating on the surface of the metal foil, and the oxide coating serves as the dielectric layer 210. As the chemical conversion process, for example, a method of applying a voltage to the metal foil immersed in a process liquid may be adopted. The process liquid is not particularly limited, but, for example, an ammonium adipate solution may be used as the process liquid.

### (4-2) Cathode Body

As the cathode body 22, a metal foil similar to the metal foil used for manufacturing the anode body 21 may be used. The cathode body 22 may have a roughened surface. The surface of the cathode body 22 may be provided with, for example, a layer containing titanium or carbon.

### (4-3) Solid Electrolyte

As illustrated in FIG. 3, the solid electrolyte 25 is in contact with the dielectric layer 210 and is disposed between the anode body 21 and the cathode body 22. The solid electrolyte 25 has fine voids therein and is thus porous. The solid electrolyte 25 is formed by: impregnating the capacitor element 10 with a polymer dispersion containing a volatile liquid component and a conductive polymer 250 dispersed in the volatile liquid component; and vaporizing the volatile liquid component from the capacitor element 10. In this case, the voltage resistance characteristics of the electrolytic capacitor 1 can be improved. Thus, the solid electrolyte 25 preferably contains the conductive polymer 250. The conductive polymer 250 is attached to at least part of a surface of the dielectric layer 210. Moreover, the conductive polymer 250 is attached to the separator 23.

As the volatile liquid component, for example, water, a nonaqueous solvent, or a mixture of water and the nonaqueous solvent may be used. As the nonaqueous solvent, a protic solvent or an aprotic solvent may be used. The protic solvent may contain, for example, one or more members selected from the group consisting of alcohols and ethers. The alcohols may contain, for example, one or more members selected from the group consisting of methanol, ethanol, propanol, butanol, ethylene glycol, and propylene glycol. The ethers may contain, for example, one or more members selected from the group consisting of formaldehyde and 1,4-dioxane. The aprotic solvent may contain, for example, one or more members selected from the group consisting of amides, esters, and ketones. The amides may contain, for example, one or more members selected from the group consisting of N-methyl acetamide, N,N-dimethyl formamide, and N-methyl -2-pyrrolidone. The esters may contain, for example, methyl acetate. The ketones may contain, for example, methyl ethyl ketone.

The conductive polymer 250 preferably contains, for example, one or more components selected from the group consisting of polypyrrole, polythiophene, polyaniline, and a derivative thereof. For example, a derivative of the polythiophene contains poly(3,4-ethylenedioxythiophene) (PEDOT) and the like. The conductive polymer 250 may contain a homopolymer or may contain a copolymer. The weight average molecular weight of the conductive polymer 250 is not particularly limited but is, for example, 1000 to 100000.

In the conductive polymer 250, a dopant has been taken. The dopant enables the conductive polymer 250 to exhibit a conductive property. The dopant is not particularly limited but may contain a component including, for example, a sulfonic acid group and may contain one or more components selected from the group consisting of aliphatic sulfonic acid, aromatic sulfonic acid, and polymer sulfonic acid.

The dopant preferably contains polymer sulfonic acid. In this case, the dopant is less likely to be released from the conductive polymer 250 as compared to a case where a monomolecular acid component is contained as the dopant, and in particular, the dopant is less likely to be released from the conductive polymer 250 even at a high temperature. The polymer sulfonic acid may contain, for example, one or more members selected from the group consisting of polyvinylsulfonic acid, polystyrenesulfonic acid, polyallylsulfonic acid, polyacrylic sulfonic acid, polymethacrylic sulfonic acid, poly(2-acrylamide-2-methylpropanesulfonic acid), and polyisoprenesulfonic acid. The dopant particularly preferably contains the polystyrenesulfonic acid. In this case, the conductive polymer 250 is assumed to be coupled to the side chain of the polystyrenesulfonic acid in a dispersed manner like islands. Thus, the dopant is less likely to be released from the conductive polymer 250, and in particular, the dopant is less likely to be released from the conductive polymer 250 even at a high temperature.

### (4-4) Liquid Component

The capacitor element 10 is impregnated with the liquid component 26, and specifically, the liquid component enters the plurality of the voids formed in the solid electrolyte 25. Thus, the liquid component 26 is in contact with the dielectric layer 210 and the solid electrolyte 25.

The liquid component 26 may function as an electrolytic solution in the electrolytic capacitor 1. The liquid component 26 includes the solvent and the acid component. The oxidative effect of the acid component can repair a defect in the dielectric layer 210. Specifically, in the dielectric layer 210, portion at which a metal foil of the anode body 21 is exposed can be oxidized to form a dielectric layer 210.

The acid component of the present embodiment contains the composite acid compound of the organic acid and the inorganic acid.

The organic acid may contain, for example, one or more members selected from the group consisting of phthalic acid, isophthalic acid, terephthalic acid, maleic acid, adipic acid, benzoic acid, toluic acid, enanthic acid, malonic acid, 1,6-decane dicarboxylic acid, 1,7-octane dicarboxylic acid, azelaic acid, salicylic acid, oxalic acid, and glycolic acid.

The inorganic acid may contain, for example, one or more members selected from the group consisting of boric acid, phosphoric acid, phosphorous acid, hypophosphorous acid, phosphoric acid ester, carbonic acid, and silicic acid.

In the present embodiment, the composite acid compound preferably contains one or more members selected from the group consisting of borodisalicylic acid, borodiglycolic acid, and borodioxalic acid.

When the electrolytic capacitor 1 is used in a state where a high frequency is applied to the electrolytic capacitor 1, the electrolytic capacitor 1 may generate heat. Since the composite acid compound is excellent in thermal stability, the composite acid compound is less likely to chemically transform even if the electrolytic capacitor 1 generates heat. This is because the organic acid and the inorganic acid form a strong complex bond with each other in the composite acid compound. For example, when the composite acid compound is the borodisalicylic acid, a hydroxyl group and a carboxyl group contained in the salicylic acid can form strong complex bonds with two hydroxyl groups contained in the boric acid. Moreover, since the composite acid compound has high acidity, the pH of the liquid component 26 can be lowered even when the composite acid compound is in the form of a neutralized salt. Thus, when the acid component contains the composite acid compound, the de-doping phenomenon that the dopant is released from the conductive polymer 250 can be suppressed.

The composite acid compound may be in the form of a salt. The salt of the composite acid compound may be, for example, in one or more forms selected from the group consisting of ammonium salt, quaternary ammonium salt, quaternization amidinium salt, and amine salt.

The acid component may contain a component other than the above-described composite acid compound.

The acid component preferably contains, for example, organic acid. The organic acid may contain, for example, one or more members selected from the group consisting of phthalic acid, isophthalic acid, terephthalic acid, maleic acid, adipic acid, benzoic acid, toluic acid, enanthic acid, malonic acid, 1,6-decane dicarboxylic acid, 1,7-octane dicarboxylic acid, azelaic acid, salicylic acid, oxalic acid, and glycolic acid.

The acid component may contain, for example, inorganic acid. The inorganic acid may contain, for example, one or more members selected from the group consisting of boric acid, phosphoric acid, phosphorous acid, hypophosphorous acid, boric acid ester, phosphoric acid ester, carbonic acid, and silicic acid.

It is also preferable that the acid component contains, for example, a composite acid compound of the organic acid and the inorganic acid. Thus, it is also preferable that the composite acid compound contains one or more members selected from the group consisting of borodisalicylic acid, borodiglycolic acid, and borodioxalic acid.

The acid component may contain, for example, a polymer acid component. The polymer acid component may contain, for example, one or more members selected from the group consisting of polyacrylic acid, polymethacrylic acid, polyvinyl sulfonic acid, polystyrenesulfonic acid, polyallylsulfonic acid, polyacrylic sulfonic acid, polymethacrylic sulfonic acid, poly(2-acrylamide -2-methylpropanesulfonic acid), and polyisoprenesulfonic acid.

When a ripple current flows through the electrolytic capacitor 1, the electrolytic capacitor 1 may generate heat. The composite acid compound and the polymer acid component are excellent in thermal stability, and therefore, when the acid component contains the composite acid compound or the polymer acid component, the acid component can be suppressed from being deteriorated by heat. Of the composite acid compound and the polymer acid component, the composite acid compound is more excellent in thermal stability, and therefore, when the acid component contains the composite acid compound, the acid component can be particularly suppressed from being deteriorated by heat.

In the present embodiment, the acid component preferably contains boric acid. The composite acid compound may be hydrolyzed with water contained in the liquid component 26. For example, when the composite acid compound is the borodisalicylic acid, hydrolysis reaction of borodisalicylic acid generates boric acid and salicylic acid. Since the salicylic acid can corrode the anode body 21 or the cathode body 22, the hydrolysis of the composite acid compound has to be suppressed to suppress the salicylic acid from being generated. In this regard, when the acid component contains the boric acid, the hydrolysis reaction of the composite acid compound can be suppressed. This is because the hydrolysis reaction is equilibrium reaction, and therefore, when the acid component contains the boric acid, progress in hydrolysis reaction can be suppressed.

The acid component preferably further contains one or more members selected from the group consisting of phosphoric acid ester and boric acid ester. Since the phosphoric acid ester and the boric acid ester are water-absorbing, the phosphoric acid ester and the boric acid ester can make the composite acid compound less likely to cause the hydrolysis reaction. When the phosphoric acid ester absorbs water, phosphoric acid is generated, whereas when the boric acid ester absorbs water, boric acid is generated. When the boric acid is generated, the equilibrium of the hydrolysis reaction of the composite acid compound tilts toward generation of the composite acid compound. Thus, the acid component contains the boric acid ester more preferably than the phosphoric acid ester.

In the present embodiment, the solvent contains the polyalkylene glycol having three or more carbon atoms per repeating unit. The polyalkylene glycol having three or more carbon atoms per repeating unit has a chain longer and is less likely to evaporate than the polyethylene glycol. Thus, even when the electrolytic capacitor 1 generates heat, the solvent is less likely to evaporate, and the solvent in the liquid component 26 can be suppressed from being reduced by the solvent vaporized and passing through a gap between the case 11 and the sealing member 12 or through the sealing member 12 itself. Thus, as compared to a case where the solvent contains the polyethylene glycol or the like, the solvent in the liquid component 26 is easily suppressed from being reduced. Moreover, when the solvent contains the polyalkylene glycol having three or more carbon atoms per repeating unit, the solidifying point of the solvent can be lowered, and the electrolytic capacitor 1 is thus easily used at a low temperature. Moreover, when the solvent contains the polyalkylene glycol having three or more carbon atoms per repeating unit, the composite acid compound is easily dissolved in the solvent, and repairing action of the dielectric layer 210 by the composite acid compound is thus easily expressed. That is, in the dielectric layer 210, the portion at which the metal foil of the anode body 21 is exposed can be oxidized with the composite acid compound, and the dielectric layer 210 can be formed.

The polyalkylene glycol having three or more carbon atoms per repeating unit may be a homopolymer or a copolymer.

In the present embodiment, the polyalkylene glycol having three or more carbon atoms per repeating unit is preferably a copolymer in which the repeating unit contains an alkylene oxide having three or more carbon atoms per repeating unit. That is, the polyalkylene glycol having three or more carbon atoms per repeating unit is preferably a copolymer containing the alkylene oxide having three or more carbon atoms per repeating unit and a repeating unit other than the alkylene oxide having three or more carbon atoms per repeating unit. In this case, the solidifying point of the solvent can be further lowered, and the electrolytic capacitor 1 is easily used at a further lowered temperature as compared to a case where the polyalkylene glycol having three or more carbon atoms per repeating unit is a homopolymer. Examples of the alkylene oxide having three or more carbon atoms per repeating unit include a propylene oxide (PO) and a butylene oxide (BO). For example, the copolymer may contain the PO or the BO, or may contain the PO and the BO.

The alkylene oxide having three or more carbon atoms per repeating unit preferably contains an ethylene oxide (EO) having two carbon atoms per repeating unit. That is, the polyalkylene glycol having three or more carbon atoms per repeating unit is preferably a copolymer containing the alkylene oxide having three or more carbon atoms per repeating unit and the ethylene oxide having two carbon atoms per repeating unit. In this case, the solidifying point of the solvent can be particularly lowered, and the electrolytic capacitor 1 is easily used at a particularly low temperature. For example, the copolymer may contain the PO and the EO, may contain the BO and the EO, or may contain the PO, the BO, and the EO.

Note that the copolymer may be a random copolymer, may be a block copolymer, or may be a block random copolymer.

In the present embodiment, the solvent contains the polyol including two or more hydroxyl groups. In this case, the composite acid compound can be dissolved in the solvent. Moreover, the polyol including two or more hydroxyl groups is less likely to evaporate even when the electrolytic capacitor 1 generates heat, and therefore, the solvent in the liquid component 26 can be suppressed from being reduced by the solvent vaporized and passing through a gap between the case 11 and the sealing member 12 or through the sealing member 12 itself. Moreover, when the dopant of the conductive polymer 250 contains the polystyrenesulfonic acid, the polyol including two or more hydroxyl groups can extend the polymeric chain of the polystyrenesulfonic acid in the conductive polymer 250. That is, the conductive polymer 250 can be swollen. In this case, the conductive property of the conductive polymer 250 can be improved. The polyol including two or more hydroxyl groups includes, for example: alkylene glycol such as ethylene glycol, diethylene glycol, triethylene glycol, and propylene glycol; saccharides such as pentaerythritol; and a polyol such as glycerol and polyglycerol containing three or more hydroxyl groups.

The polyol including two or more hydroxyl groups particularly preferably contains alkylene glycol with three or more carbon atoms. The alkylene glycol with three or more carbon atoms is less likely to evaporate even when the electrolytic capacitor 1 generates heat, and therefore, the alkylene glycol with three or more carbon atoms can suppress the solvent in the liquid component 26 from being reduced. When the dopant of the conductive polymer 250 contains the polystyrenesulfonic acid, the alkylene glycol with three or more carbon atoms can cause the conductive polymer 250 to swell to improve the conductive property of the conductive polymer 250. The polyol including two or more hydroxyl groups is particularly preferably the propylene glycol of the alkylene glycol with three or more carbon atoms.

The polyol including two or more hydroxyl groups particularly preferably contains one or more members selected from the group consisting of glycerol and polyglycerol. The glycerol and the polyglycerol are less likely to evaporate even when the electrolytic capacitor 1 generates heat, and therefore, the glycerol and the polyglycerol can suppress the solvent in the liquid component 26 from being reduced. When the dopant of the conductive polymer 250 contains the polystyrenesulfonic acid, the glycerol and the polyglycerol can cause the conductive polymer 250 to swell to improve the conductive property of the conductive polymer 250. Moreover, as compared to a case where the solvent is γ-butyrolactone or sulfolane, the pH of the liquid component 26 can be further reduced when the acid component contains the composite acid compound and the solvent contains one or more members selected from the group consisting of the glycerol and the polyglycerol. This is probably because the glycerol or polyglycerol is the protic solvent.

In the present embodiment, the weight of the polyalkylene glycol having three or more carbon atoms per repeating unit in the solvent is preferably greater than the weight of the polyol including two or more hydroxyl groups. That is, the ratio by weight of the polyalkylene glycol having three or more carbon atoms per repeating unit in the solvent is preferably greater than that of the polyol including two or more hydroxyl groups. When the polyalkylene glycol having three or more carbon atoms per repeating unit and the polyol including two or more hydroxyl groups are compared with each other, the polyalkylene glycol having three or more carbon atoms per repeating unit is less likely to evaporate even when the electrolytic capacitor 1 generates heat. Therefore, when the ratio by weight of the polyalkylene glycol having three or more carbon atoms per repeating unit is increased, the solvent in the liquid component 26 is easily suppressed from being reduced even in an environment in which the electrolytic capacitor 1 easily generates heat, for example, when the electrolytic capacitor 1 is used in a high frequency circuit.

### 2-2. Manufacturing Method of Electrolytic Capacitor

Steps in an example of a manufacturing method of the electrolytic capacitor 1 will be described below.

### (1) Formation of Anode Body

First, a metal foil which is a raw material of the anode body 21 is prepared. A surface of the metal foil may be roughened to form fine recesses and projections on the surface of the metal foil. The surface of the metal foil may be roughened by subjecting the metal foil to, for example, an etching process. As the etching process, for example, a direct current electrolytic process or an alternating current electrolytic process may be adopted.

Then, the dielectric layer 210 is formed on the roughened surface of the metal foil. A method of forming the dielectric layer 210 is not particularly limited but, for example, the dielectric layer 210 may be formed by subjecting a metal foil to a chemical conversion process. In the chemical conversion process, for example, a metal foil having a roughened surface is immersed in a chemical conversion liquid such as an ammonium adipate solution and is then heated or applied with a voltage. The anode body 21 having a surface provided with the dielectric layer 210 may be formed by cutting the metal foil after the chemical conversion process into a desired size. Alternatively, the anode body 21 may be formed by cutting a metal foil into a desired size in advance and then providing the dielectric layer 210 on the metal foil having the desired size. The lead wire 14A is connected to the anode body 21. A method of connecting the anode body 21 and the lead wire 14A to each other is not particularly limited but may use, for example, jointing by swaging or ultrasonic wave welding.

### (2) Formation of Cathode Body

The cathode body 22 may be formed from a metal foil by a similar method to the anode body 21.

The lead wire 14B is connected to the cathode body 22. A method of connecting the cathode body 22 and the lead wire 14B to each other is not particularly limited but may use, for example, swaging and/or an ultrasonic wave.

If necessary, the surface of the cathode body 22 may be roughened, or a layer containing titanium and/or carbon may be formed on the surface of the cathode body 22.

### (3) Formation of Winding Body

In this step, the anode body 21, the cathode body 22, and the separator 23 are used to form the winding body as illustrated in FIG. 2. An end of the cathode body 22 located on an outermost layer is fixed with the unwinding prevention tape 24. When the anode body 21 is formed by cutting a large metal foil, the winding body may be further subjected to a chemical conversion process to provide a dielectric layer on the cutting surface of the anode body 21.

The sealing member 12 is disposed in such a state that the lead wires 14A and 14B taken out of the anode body 21 and the cathode body 22 are pulled out through the through holes formed in the sealing member 12.

### (4) Formation of Capacitor Element

In this step, the solid electrolyte 25 containing the conductive polymer 250 is formed on the surface of the dielectric layer 210 formed on the surface of the anode body 21, thereby forming the capacitor element 10.

The solid electrolyte 25 may be formed by attaching the conductive polymer 250 formed in advance to the dielectric layer 210. In this case, a polymer dispersion containing the conductive polymer 250 is preferably used. The polymer dispersion contains the volatile liquid component and the conductive polymer 250 dispersed in the volatile liquid component and doped with a dopant. For example, the winding body is impregnated with the polymer dispersion and is then dried, and thereby, the solid electrolyte 25 may be attached to the surface of the dielectric layer 210. In this case, the solid electrolyte 25 may be attached to the surface of the separator 23 and also the surface of the cathode body 22. Moreover, the conductive polymer 250 may be attached to the separator 23. This step may be repeated two or more times. In this case, the coverage factor of the solid electrolyte 25 to the dielectric layer 210 can be increased.

### (5) Impregnation with Liquid Component

Then, the capacitor element 10 is impregnated with the liquid component 26. This enables the liquid component 26 to enter fine voids formed in the solid electrolyte 25. Thus, the liquid component 26 comes into contact with the dielectric layer 210 and the solid electrolyte 25. A method of impregnating the capacitor element 10 with the liquid component 26 is not particularly limited.

### (6) Sealing of Capacitor Element

Next, the capacitor element 10 is accommodated in the case 11.

Then, a lateral drawing process is performed in the vicinity of an opening end of the case 11 to swage the opening end on the sealing member 12 and curl the opening end. Then, the seat plate 13 is disposed at a side of the opening end thus curled.

Through these steps, the electrolytic capacitor 1 as illustrated in FIG. 1 is obtained. Thereafter, an aging process may be performed while a rated voltage is applied.

### 2-3. Application of Electrolytic Capacitor

The application of the electrolytic capacitor 1 is not particularly limited. The electrolytic capacitor 1 may be used in a substrate of an engine control unit (ECU) of an automobile, a switching power supply, or the like of an automobile, for example. The automobile is mainly assumed to be an electric car, a hybrid car, or the like but may be a gasoline engine car or a diesel engine car. The electrolytic capacitor 1 is also applicable to, for example, two-wheel vehicles (including electric bikes (e-bikes)), airplanes, ships, and drones. Moreover, the electrolytic capacitor 1 may be used in, for example, a power supply device of a Central Processing Unit (CPU) of server devices, computer devices, and video game consoles. In addition, the electrolytic capacitor 1 may be used in, for example, a power supply device of a Field-Programmable Gate Array (FPGA) such as a communication device and an industry apparatus, and a power supply device of a Graphics Processing Unit (GPU) such as a graphic board. The application of the electrolytic capacitor 1 is not limited to these examples, but the electrolytic capacitor 1 is applicable to various fields.

### 2-4. Variations

The configuration of the electrolytic capacitor 1 is not limited to the configuration of the above-described embodiment.

For example, the capacitor element 10 does not have to be a winding body but may be of a chip type that includes a sintered body made of metal as the anode body or of a stacked layer type that includes a metal plate as the anode body.

For example, the solid electrolyte 25 does not have to be formed from the polymer dispersion, but a polymerization liquid may be given to the dielectric layer 210 to form the solid electrolyte 25 in situ by a chemical polymerization method or an electrolytic polymerization method. That is, the conductive polymer 250 may be formed by the chemical polymerization method or the electrolytic polymerization method using the polymerization liquid. The polymerization liquid is a solution containing a monomer, an oligomer, a dopant, or the like. When the conductive polymer 250 is formed by the chemical polymerization, an oxidant is preferably added to the polymerization liquid. The polymerization liquid preferably contains, for example, one or more components selected from the group consisting of pyrroll, aniline, thiophene, and a derivative thereof.

For example, the solid electrolyte 25 does not have to contain the conductive polymer 250. The solid electrolyte 25 in this case may be, for example, manganese dioxide, organic semiconductor, or the like.

### (Second Embodiment)

An electrolytic capacitor 1 according to an aspect of a second embodiment includes an anode body 21, a cathode body 22, a solid electrolyte 25, and a liquid component 26 in a similar manner to the first embodiment. The anode body 21 has a surface on which a dielectric layer 210 is to be formed. The solid electrolyte 25 is in contact with the dielectric layer 210 and is located between the anode body 21 and the cathode body 22. The liquid component 26 is in contact with the dielectric layer 210 and the solid electrolyte 25 and includes a solvent and an acid component. The acid component includes a composite acid compound of an inorganic acid and an organic acid. The solvent includes a polyol including two or more hydroxyl groups.

The electrolytic capacitor 1 according to the second embodiment is different from the electrolytic capacitor 1 according to the first embodiment in that the solvent contains a polyalkylene glycol and the weight of the polyalkylene glycol in the solvent is greater than the weight of the polyol including two or more hydroxyl groups.

A polyalkylene glycol having three or more carbon atoms per repeating unit does not include a polyalkylene glycol having two carbon atoms per repeating unit, but the polyalkylene glycol includes the polyalkylene glycol having two carbon atoms per repeating unit. For example, the polyalkylene glycol includes polyethylene glycol. Therefore, in the electrolytic capacitor 1 according to the second embodiment, the solvent may contain the polyethylene glycol.

The weight of the polyalkylene glycol in the solvent is set to be greater than that of the polyol including two or more hydroxyl groups, and thereby, the solidifying point of the solvent can be reduced, so that the electrolytic capacitor 1 is readily used even at a low temperature. Moreover, the polyalkylene glycol and the polyol including two or more hydroxyl groups are compared with each other, the polyalkylene glycol is less likely to evaporate. Thus, the ratio by weight of the polyalkylene glycol in the solvent is increased, and thereby, the solvent in the liquid component 26 is easily suppressed from being reduced even when the electrolytic capacitor 1 is used in an environment in which the electrolytic capacitor 1 easily generates heat, for example, in a state where a high frequency is applied to the electrolytic capacitor 1.

### Examples

The present disclosure will be described in more detail based on examples. However, the present disclosure is not limited to the following examples.

In the below-described examples, winding-type electrolytic capacitors (Φ10 mm × L (height) 10 mm) each having a rated voltage of 25 V and a rated electrostatic capacitance of 330 µF were manufactured. A specific manufacturing method of the electrolytic capacitors will be described below.

### (Preparation of Anode Body)

An aluminum foil having a thickness of 100 µm was subjected to an etching process to roughen the surface of the aluminum foil. Then, a dielectric layer was formed on the surface of the aluminum foil by a chemical conversion process. The chemical conversion process was performed by immersing the aluminum foil in an ammonium adipate solution and then applying a voltage of 50 V to the aluminum foil. Thereafter, the aluminum foil was cut to prepare the anode body.

### (Preparation of Cathode Body)

An aluminum foil having a thickness of 50 µm was subjected to an etching process to roughen the surface of the aluminum foil. Then, the aluminum foil was cut to prepare the cathode body.

### (Formation of Winding Body)

An anode lead tab and a cathode lead tab are respectively connected to the anode body and the cathode body, and the anode body and the cathode body are wound with a separator made of cellulose provided therebetween while the lead tabs are wound together, thereby obtaining a winding body. The anode lead wire and the cathode lead wire were connected to respective ends of the lead tubs, the respective ends protruding from the winding body. The winding body thus formed was subjected to the chemical conversion process again, thereby forming a dielectric layer at the cut end of the anode body. Then, an end on the outer surface of the winding body was fixed with a fixing tape. In this way, a plurality of winding bodies were formed.

### (Preparation of Polymer Dispersion)

In ion-exchanged water, 3,4-ethylenedioxythiophene and polystyrenesulfonic acid (PSS, weight average molecular weight 100,000) which is a polymer dopant were dissolved, thereby preparing a mixed solution. While the mixed solution was stirred, a sulfuric acid iron (III) (oxidant) dissolved in the ion-exchanged water was added, thereby causing polymerization reaction. After the reaction, the obtained reaction liquid was dialyzed, and an unreacted monomer and excessive oxidant were removed, thereby obtaining a polymer dispersion containing about 5 mass% of polyethylene dioxythiophene doped with PSS (PEDOT/PSS).

### (Formation of Solid Electrolyte Layer)

In a depressurized atmosphere (40 kPa), the winding bodies were immersed, for 5 minutes, in a polymer dispersion accommodated in a prescribed container, and then, the winding bodies were pulled out of the polymer dispersion. Then, the winding bodies impregnated with the polymer dispersion were dried in a drying furnace at 150°C for 20 minutes, thereby forming a solid electrolyte layer including a conductive polymer layer covering at least part of the dielectric layer.

### (Impregnation of Electrolytic Solution)

Electrolytic solutions containing components shown in Table 1 at ratios shown in Table 1 were prepared, and winding bodies were immersed in respective liquid components (the respective electrolytic solutions) in a depressurized atmosphere (40 kPa) for 5 minutes.

### (Sealing of Capacitor Element)

Capacitor elements impregnated with the respective electrolytic solutions were sealed to complete the electrolytic capacitors (Examples 1 to 15 and Comparative Examples 1 and 2) as illustrated in FIG. 1. Thereafter, an aging process was performed at 130°C for 2 hours while a rated voltage is applying.

**[Table 1]**

| | ELECTROLYTIC SOLUTION [wt%] | | | | | | | | | | | |
|---|---|---|---|---|---|---|---|---|---|---|---|---|
| | ELECTROLYTIC SALT | POLYOL | | | | POLYALKYLENE GLYCOL | | | | | ESR(-55°C, 100kHz) A ESR | |
| | BS-TEA | EG | PG | GOL | PGOL | PPG | EO-PO | EO-BO | PEG200 PEG300 | | [mΩ] | X/X₀ |
| EXAMPLE 1 | 10 | 60 | | | | 30 | | | | | 10.5 | 1.51 |
| EXAMPLE 2 | 10 | | | 60 | | 30 | | | | | 10.8 | 1.47 |
| EXAMPLE 3 | 10 | | | | 60 | 30 | | | | | 10.9 | 1.38 |
| EXAMPLE 4 | 10 | 60 | | | | | 30 | | | | 10 | 1.29 |
| EXAMPLE 5 | 10 | 60 | | | | | | 30 | | | 10.1 | 1.34 |
| EXAMPLE 6 | 10 | | | 60 | | | 30 | | | | 10.3 | 1.26 |
| EXAMPLE 7 | 10 | | 60 | | | | 30 | | | | 9.8 | 1.43 |
| EXAMPLE 8 | 10 | | | | 60 | | 30 | | | | 10.5 | 1.24 |
| EXAMPLE 9 | 10 | 30 | | | | | | | 60 | | 11.1 | 1.20 |
| EXAMPLE 10 | 10 | 30 | | | | | | | | 60 | 11.5 | 1.18 |
| EXAMPLE 11 | 10 | 30 | | | | | 60 | | | | 10.6 | 1.15 |
| EXAMPLE 12 | 10 | 30 | | | | | | 60 | | | 10.8 | 1.19 |
| EXAMPLE 13 | 10 | | | 30 | | | | | | 60 | 11.7 | 1.17 |
| EXAMPLE 14 | 10 | | | | 30 | | | | | 60 | 12.1 | 1.18 |
| EXAMPLE 15 | 10 | | 30 | | | | | | | 60 | 11.1 | 1.22 |
| COMPARATIVE EXAMPLE 1 | 10 | 100 | | | | | | | | | 14.3 | 2.04 |
| COMPARATIVE EXAMPLE 2 | 10 | | 100 | | | | | | | | 13.1 | 2.52 |
| | | | | | | | | | | | | |
| BS : BORODISALICYLIC ACID | | | | | | | | | | | | |
| TEA : TRIETHYLAMINE | | | | | | | | | | | | |
| EG : ETHYLENE GLYCOL | | | | | | | | | | | | |
| GOL : GLYCEROL | | | | | | | | | | | | |
| PGOL : POLYGLYCEROL (n=5) | | | | | | | | | | | | |
| PPG : POLYPROPYLENE GLYCOL (WEIGHT AVERAGE MOLECULAR WEIGHT 3000) | | | | | | | | | | | | |
| EO-PO : ETHYLENE OXIDE/PROPYLENE OXIDE COPOLYMER (MOLAR RATIO 1 : 1) (WEIGHT AVERAGE MOLECULAR WEIGHT 2000) | | | | | | | | | | | | |
| EO-BO : ETHYLENE OXIDE/BUTYLENE OXIDE COPOLYMER (MOLAR RATIO 1 : 1) (WEIGHT AVERAGE MOLECULAR WEIGHT 2000) | | | | | | | | | | | | |
| PEG200 : POLYETHYLENE GLYCOL (WEIGHT AVERAGE MOLECULAR WEIGHT 200) | | | | | | | | | | | | |
| PEG300 : POLYETHYLENE GLYCOL (WEIGHT AVERAGE MOLECULAR WEIGHT 300) | | | | | | | | | | | | |

### (Evaluation)

The low temperature ESR and the ESR change rate of the obtained electrolytic capacitors were measured by the following method.

### (1) Low Temperature ESR

At an environment temperature of -55°C, the ESR of each electrolytic capacitor at a frequency of 100 kHz/Q was measured with a LCR meter. The results are shown in Table 1.

### (2) ESR Change

The initial equivalent series resistance (ESR) of each electrolytic capacitor thus obtained was measured. Then, in order to evaluate long-term reliability, the change rate (ΔESR) of the ESR was checked with each electrolytic capacitor being kept at 125°C for 5000 hours while a rated voltage was applied thereto.

The ΔESR was shown as a proportion (X/X0) of the ESR(X) after each electrolytic capacitor to the initial value (X0) was kept at 125°C. Note that as the ESR, the value of each electrolytic capacitor at a frequency of 100 kHz was measured with a LCR meter in an environment of a room temperature.

### 3. Summary

An electrolytic capacitor (1) according to a first aspect includes an anode body (21), a cathode body (22), a solid electrolyte (25), and a liquid component (26). The anode body (21) has a surface provided with a dielectric layer (210). The solid electrolyte (25) is in contact with the dielectric layer (210) and is disposed between the anode body (21) and the cathode body (22). The liquid component (26) is in contact with the dielectric layer (210) and the solid electrolyte (25). The liquid component (26) contains a solvent and an acid component. The acid component contains a composite acid compound of an inorganic acid and an organic acid. The solvent contains a polyol including two or more hydroxyl groups and a polyalkylene glycol having three or more carbon atoms per repeating unit.

According to the first aspect, the composite acid compound is dissolved in the solvent. In addition, the solidifying point of the solvent is reduced. As a result, the electrolytic capacitor (1) is readily used also at a low temperature, so that the electrolytic capacitor (1) is usable at various temperatures.

An electrolytic capacitor (1) according to a second aspect includes an anode body (21), a cathode body (22), a solid electrolyte (25), and a liquid component (26). The anode body (21) has a surface provided with a dielectric layer (210). The solid electrolyte (25) is in contact with the dielectric layer (210) and is disposed between the anode body (21) and the cathode body (22). The liquid component (26) is in contact with the dielectric layer (210) and the solid electrolyte (25) and contains a solvent and an acid component. The acid component contains a composite acid compound of an inorganic acid and an organic acid. The solvent contains a polyol including two or more hydroxyl groups and a polyalkylene glycol. The polyalkylene glycol has a weight greater than a weight of the polyol.

According to the second aspect, the composite acid compound is dissolved in the solvent. In addition, the solidifying point of the solvent is reduced. As a result, the electrolytic capacitor (1) is readily used also at a low temperature, so that the electrolytic capacitor (1) is usable at various temperatures.

In an electrolytic capacitor (1) according to a third aspect referring to the first or second aspect, the polyol contains alkylene glycol with three or more carbon atoms.

According to the third aspect, the solvent in the liquid component (26) is suppressed from being reduced. In addition, the conductive property of the conductive polymer (250) is improved.

In an electrolytic capacitor (1) according to a fourth aspect referring to the first to third aspects, the polyol contains one or more members selected from the group consisting of glycerol and polyglycerol.

According to the fourth aspect, the solvent in the liquid component (26) is suppressed from being reduced. In addition, the conductive property of the conductive polymer (250) is improved. Moreover, the pH of the liquid component (26) is lowered as compared to a case where the solvent is γ-butyrolactone or sulfolane.

In an electrolytic capacitor (1) according to a fifth aspect referring to any of the first, third, and fourth aspects, the polyalkylene glycol is a copolymer containing alkylene oxide having three or more carbon atoms per repeating unit.

According to the fifth aspect, the solidifying point of the solvent is further lowered and the electrolytic capacitor (1) is readily used at a further lowered temperature as compared to a case where the polyalkylene glycol having three or more carbon atoms per repeating unit is a homopolymer.

In an electrolytic capacitor (1) according to a sixth aspect referring to any of the first, third, fourth, and fifth aspects, the polyalkylene glycol has a weight greater than a weight of the polyol.

According to the sixth aspect, when the ratio by weight of the polyalkylene glycol having three or more carbon atoms per repeating unit is increased, the solvent in the liquid component 26 is suppressed from being reduced even in an environment in which the electrolytic capacitor (1) easily generates heat.

In an electrolytic capacitor (1) according to a seventh aspect referring to any one of the first to sixth aspects, the acid component contains boric acid.

According to the seventh aspect, when the acid component contains the boric acid, hydrolysis reaction of the composite acid compound is suppressed.

In an electrolytic capacitor (1) according to an eighth aspect referring to any one of the first to seventh aspects, the composite acid compound contains one or more members selected from the group consisting of borodisalicylic acid, borodiglycolic acid, and borodioxalic acid.

According to the eighth aspect, the composite acid compound is less likely to chemically transform even in an environment in which the electrolytic capacitor (1) easily generates heat. In addition, the pH of the liquid component (26) is lowered, and a de-doping phenomenon that a dopant is released from the conductive polymer (250) is suppressed.

### Reference Signs List

- 1: ELECTROLYTIC CAPACITOR
- 21: ANODE BODY
- 210: DIELECTRIC LAYER
- 22: CATHODE BODY
- 25: SOLID ELECTROLYTE
- 26: LIQUID COMPONENT

## Claims

1. An electrolytic capacitor, comprising:
an anode body having a surface provided with a dielectric layer;
a cathode body;
a solid electrolyte in contact with the dielectric layer and disposed between the anode body and the cathode body; and
a liquid component in contact with the dielectric layer and the solid electrolyte, the liquid component containing a solvent and an acid component,
the acid component containing a composite acid compound of an inorganic acid and an organic acid,
the solvent containing a polyol including two or more hydroxyl groups and a polyalkylene glycol having three or more carbon atoms per repeating unit.

2. An electrolytic capacitor, comprising:
an anode body having a surface provided with a dielectric layer;
a cathode body;
a solid electrolyte in contact with the dielectric layer and disposed between the anode body and the cathode body; and
a liquid component in contact with the dielectric layer and the solid electrolyte and containing a solvent and an acid component,
the acid component containing a composite acid compound of an inorganic acid and an organic acid,
the solvent containing a polyol including two or more hydroxyl groups and a polyalkylene glycol,
the polyalkylene glycol having a weight greater than a weight of the polyol.

3. The electrolytic capacitor of claim 1 or 2, wherein
the polyol contains alkylene glycol with three or more carbon atoms.

4. The electrolytic capacitor of any one of claims 1 to 3, wherein
the polyol contains one or more members selected from the group consisting of glycerol and polyglycerol.

5. The electrolytic capacitor of any one of claims 1, 3, and 4, wherein
the polyalkylene glycol is a copolymer containing alkylene oxide having three or more carbon atoms per repeating unit.

6. The electrolytic capacitor of any one of claims 1, 3, 4, and 5, wherein
the polyalkylene glycol has a weight greater than a weight of the polyol.

7. The electrolytic capacitor of any one of claims 1 to 6, wherein
the acid component contains boric acid.

8. The electrolytic capacitor of any one of claims 1 to 7, wherein
the composite acid compound contains one or more members selected from the group consisting of borodisalicylic acid, borodiglycolic acid, and borodioxalic acid.
